# EUROPEAN PATENT APPLICATION

(11) **EP 2 696 151 A2**
(43) Date of publication of application: **12.02.2014**
(21) Application number: 13003590.0
(22) Date of filing: 17.07.2013
(51) Int. Cl.: F24J 2/52, F24J 2/46, H01L 31/042

(54) **Modular supporting structure for a solar energy system.**

(30) Priority: 07.08.2012 IT VI20120205
(71) Applicant: Bianchini, Giovanni, 36077 Altavilla Vicentina (VI) (IT)
(72) Inventor: Bianchini, Giovanni, 36077 Altavilla Vicentina (VI) (IT)
(74) Representative: Ziliotto, Tiziano

(57) **Abstract**

The present invention is a modular supporting structure (3; 103; 203) for a solar energy system (1; 100; 200) of the type comprising at least one solar panel (2), suited to be fixed to a supporting base (S) and comprising: a first supporting element (4; 104) suited to be arranged in contact with a first surface of the panel (2); a first closing element (5) suited to be associated with the first supporting element (4; 104) and suited to be arranged in contact with a second surface of the panel (2) so as to secure the panel (2). The invention also concerns a solar energy system (1; 100; 200) of the type comprising at least one solar panel (2) suited to be fixed to a supporting base (S) through a modular supporting structure (3; 103; 203).

## Description

### TECHNICAL FIELD OF THE INVENTION

The present invention concerns the technical field of the construction of systems that exploit solar energy to produce electrical energy and/or thermal energy, that is, photovoltaic systems or solar thermal systems.

In particular, the present invention concerns the construction of photovoltaic systems or solar thermal systems suited to be installed on roofs.

More particularly, the present invention refers to the method of installation of said systems.

### DESCRIPTION OF THE STATE OF THE ART

Systems are known that exploit solar energy to produce electrical energy or thermal energy and are also known, respectively, as photovoltaic systems and solar thermal systems.

A photovoltaic system, or photovoltaic plant, is a system that is substantially constituted by the assembly of several photovoltaic modules, also called photovoltaic generators or solar photovoltaic panels, which exploit the incident solar energy to produce electrical energy through a photovoltaic effect.

Solar photovoltaic panels are associated with further devices suited to manage and properly treat the energy generated by the same photovoltaic panels before it is directly used on site or in order to introduce it in the mains.

A solar thermal system usually consists of a thermal solar panel, also called solar collector, which constitutes a device suited to convert sun radiation into thermal energy and to transfer it, for example, towards a heat accumulator for a successive use, typically in the form of hot water for heating and in some cases for the production of electrical energy.

Solar panels, independently of whether they are of the photovoltaic or the thermal type, are installed in different manners.

According to a known type of installation, solar panels are assembled on a surface, preferably plane or even more preferably inclined, in order to exploit solar energy as much as possible and with the best possible angle of incidence. These solar panels are typically installed on the roof of civil or industrial buildings.

One of the objects on which installers focus much attention lies in the possibility to integrate the solar panels as much as possible into the surrounding roof portion. More particularly, the object is to integrate the solar panels as much as possible, in order to obtain continuity with roof tiles, gutters or other elements that make up the roof.

According to the known technique, solar panels are assembled side by side and then fixed firmly to the underlying surface of the roof.

For this fixing operation connection elements like screws, Fisher^{®} anchors, rivets or similar elements are used, which permanently secure suitable shaped portions of the solar panel in the points where holes for the passage of said connection elements are provided.

The techniques used for the installation of solar panels of the known type, however, pose some drawbacks.

A first drawback posed by these techniques lies in the complexity of the operations required to lay the panels on the underlying supporting surface.

This requires considerable laying times and consequently leads to high installation costs.

A further drawback posed by said installation techniques is represented by the difficulties that arise in case of maintenance and/or repair operations requiring the removal of one or more of said solar panels and their successive repositioning.

In fact, it will be necessary to remove the fixing elements and therefore to reposition the new panel through the application of the fixing elements.

These operations are usually long and complicated and have direct consequences on the cost of the intervention.

A further drawback posed by the systems of the known art lies in the need to resort to finishing operations in order to make the surface made up by the solar panels as waterproof as possible and thus avoid water infiltrations in the underlying surface, in particular when said surface is constituted by the roof of a building.

These finishing operations typically comprise the application of sealing materials, usually silicone, in the fissures present between adjacent panels.

In case of repairs and/or replacement of one or more panels, it will first be necessary to remove said sealing material, to clean the surfaces and to apply the new sealing material once the new or repaired panel has been installed.

These operations are long and complicated and have direct consequences on the cost of the intervention.

Another drawback posed by these techniques is represented by the fact that it is difficult to lay the solar panels, due to the inevitable imperfect planarity of the underlying supporting surface.

In order to remedy the differences due to the imperfect planarity of the supporting surface, shims are generally used to compensate for such differences and are interposed between the solar panel and the underlying surface.

The main object of the present invention is thus to at least partially overcome said drawbacks.

It is a first object of the present invention to provide a solar energy system in which the installation operations are simplified with respect to the known systems.

It is another object of the present invention to provide a solar energy system with improved sealing characteristics compared to the known systems.

It is a further object of the present invention to provide a solar energy system that reduces the costs for maintenance and/or repair operations compared to the systems of the known type.

It is a further object of the present invention to provide a complete solar energy system comprising a system for fixing to the roof, a waterproofing system and a system for conveying rainwater.

### SUMMARY OF THE PRESENT INVENTION

The present invention is based on the general consideration that it is desirable to be able to simplify the operations required for the installation of a solar energy system having one or more solar panels, by using a modular supporting structure comprising two elements suited to secure said solar panels to each other. According to a first aspect, the subject of the present invention, therefore, is a modular supporting structure for a solar energy system of the type comprising at least one solar panel, said modular supporting structure being suited to be fixed to a supporting base and comprising:
- a first supporting element suited to be arranged in contact with a first surface of said at least one panel;
- a first closing element suited to be associated with said first supporting element and suited to be arranged in contact with a second surface of said at least one panel so as to secure said at least one panel.

Preferably, the first closing element and the first supporting element are suited to fix the solar panel when the first closing element is associated with the first supporting element.

Preferably, the first closing element and the first supporting element are suited to be arranged in contact with the first surface and the second surface of the panel at the level of a first peripheral edge of the panel itself.

According to a preferred embodiment of the invention, the modular structure also comprises:
- a second supporting element suited to be arranged in contact with a first surface of the panel;
- a second closing element suited to be associated with the second supporting element and suited to be arranged in contact with a second surface of the panel in order to secure said panel.

Preferably, the second closing element and the second supporting element are suited to secure the solar panel when the second closing element is associated with the second supporting element.

Preferably, the second closing element and the second supporting element are suited to be arranged in contact with the first surface and the second surface of the panel at the level of a second peripheral edge of the panel itself.

In a preferred embodiment of the invention, the modular structure comprises:
- two first supporting elements suited to be respectively arranged in contact with a first pair of parallel sides of the panel;
- two first closing elements suited to be associated with the first two supporting elements;
- two second supporting elements suited to be respectively arranged in contact with a second pair of parallel sides of the panel;
- two second closing elements suited to be associated with the second two supporting elements.

In this case the panel has preferably the shape of a parallelogram.

The first supporting elements and the second supporting elements are properly suited to be arranged under a plurality of solar panels in such a way as to define a matrix structure.

In a preferred embodiment of the invention, the second supporting elements comprise end portions suited to be connected to the first supporting elements. Advantageously, the first supporting elements, the first closing elements, the second supporting elements and the second closing elements develop longitudinally. Preferably, said elements are of the section type, more preferably obtained through an extrusion process.

Preferably, the first supporting element comprises a seat suited to accommodate a gasket element.

Advantageously, the gasket element is suited to be interposed between the first supporting element and the first surface of the panel.

Preferably, the first closing element comprises a seat suited to accommodate a gasket element.

Advantageously, the gasket element is suited to be interposed between the first closing element and the second surface of the panel.

The modular supporting structure properly comprises means suited to secure the first closing element to the first supporting element.

Advantageously, said securing means comprise fixing screws.

In a preferred embodiment of the invention, the modular supporting structure comprises at least one drainage element suited to be positioned at the periphery of the modular supporting structure, the drainage element being locked between the first closing element and the first supporting element when the first closing element is associated with the first supporting element.

Advantageously, the drainage element comprises a fixing portion suited to be locked between the first closing element and the first supporting element when the first closing element is associated with the first supporting element and comprises a drainage surface for conveying rainwater.

In a preferred embodiment of the invention, the drainage element comprises at least one vent suited to allow the passage of air towards said modular supporting structure.

Preferably, the vent is created in an area that does not affect the drainage surface for conveying rainwater.

According to a preferred embodiment of the invention, the first supporting element comprises at least two parts suited to be associated with each other, wherein an intermediate element suited to produce thermal discontinuity between said parts can be positioned between said two parts.

Preferably, said intermediate element comprises a sheath.

More preferably, said sheath is a transpiring waterproof sheath.

In a preferred embodiment of the invention, the modular supporting structure comprises at least one fixing element suited to fix the modular supporting structure to the supporting base.

Preferably, the fixing element comprises a first portion suited to be connected to the supporting base and a second portion suited to be connected to the modular supporting structure.

Preferably, the fixing element that is the subject of the invention comprises adjusting means suited to allow the first portion to be arranged in at least two different operating positions with respect to the second portion.

In a preferred embodiment of the invention, the adjusting means comprise at least one articulation area defined between the first and the second portion.

Preferably, the fixing element of the invention comprises securing means suited to allow the first portion to be secured in at least one of said two different operating positions with respect to the second portion.

In the preferred embodiment comprising at least one articulation area, said securing means are preferably associated with said articulation area.

The fixing element of the invention properly comprises first fixing means suited to allow the first portion to be fixed to the supporting base.

In a preferred embodiment of the invention, the first fixing means suited to fix the first portion to the supporting base comprise a fixing screw.

The fixing element of the invention properly comprises second fixing means suited to allow the second portion to be fixed to the modular supporting structure. In a preferred embodiment of the invention, the second fixing means comprise snap-in fixing means.

According to a second aspect, the present invention concerns a solar energy system of the type comprising at least one solar panel suited to be fixed to a supporting base through a modular supporting structure, in which the modular supporting structure is produced according to the description provided above.

In a preferred embodiment, the solar energy system of the invention is a photovoltaic system suited to convert solar energy into electrical energy.

In another preferred embodiment, the solar energy system of the invention is a thermal system suited to convert solar energy into thermal energy.

Preferably, the supporting base for said solar energy system is constituted by the surface of a building's roof.

### BRIEF DESCRIPTION OF THE DRAWINGS

Further advantages, objects and characteristics, as well as further embodiments of the present invention are defined in the claims and will be illustrated here below through the following description, with reference to the attached drawings; in the figures, corresponding or equivalent characteristics and/or component parts of the present invention are identified by the same reference numbers. In particular, in the figures:
- Figure 1 shows an axonometric view of a photovoltaic system according to a preferred embodiment of the present invention;
- Figure 2 shows an exploded axonometric view of a detail of the system shown in Figure 1;
- Figure 3 shows a partially exploded detail of the system shown in Figure 1, in which it is possible to observe an element for connection to the underlying surface;
- Figure 4 shows another partially exploded detail of the system of Figure 1, in which it is possible to observe an element for connection to the underlying surface;
- Figure 5 shows a partial cross section view of the system shown in Figure 1, associated with two connection elements in a particular operating condition;
- Figure 6 shows an enlarged detail of Figure 5;
- Figure 7 shows a variant embodiment of Figure 5;
- Figure 8 shows a variant embodiment of Figure 3;
- Figure 9 shows a cross section view of a detail of Figure 8;
- Figure 10 shows a partial axonometric view of a further element of the system illustrated in Figure 1.

### DETAILED DESCRIPTION OF THE PRESENT INVENTION

Although the present invention is described here below with reference to its embodiments illustrated in the drawings, the present invention is not limited to the embodiments described below and shown in the drawings. On the contrary, the embodiments described and illustrated herein clarify some aspects of the present invention, the scope of which is defined in the claims.

The present invention has proved to be particularly advantageous when used in the photovoltaic systems using solar panels of the photovoltaic type suited to be installed on the roofs of civil or industrial buildings. It should however be noted that the possible applications of the present invention are not limited to the photovoltaic systems suited to be installed on roofs. On the contrary, the present invention can be conveniently applied in all the cases where it is necessary to install solar panels, for example solar panels of the thermal type, on more or less plane and more or less inclined surfaces.

The present invention can be conveniently applied also in thermal energy systems of the mixed type, meaning of the type comprising solar panels suited to produce both electrical energy and thermal energy.

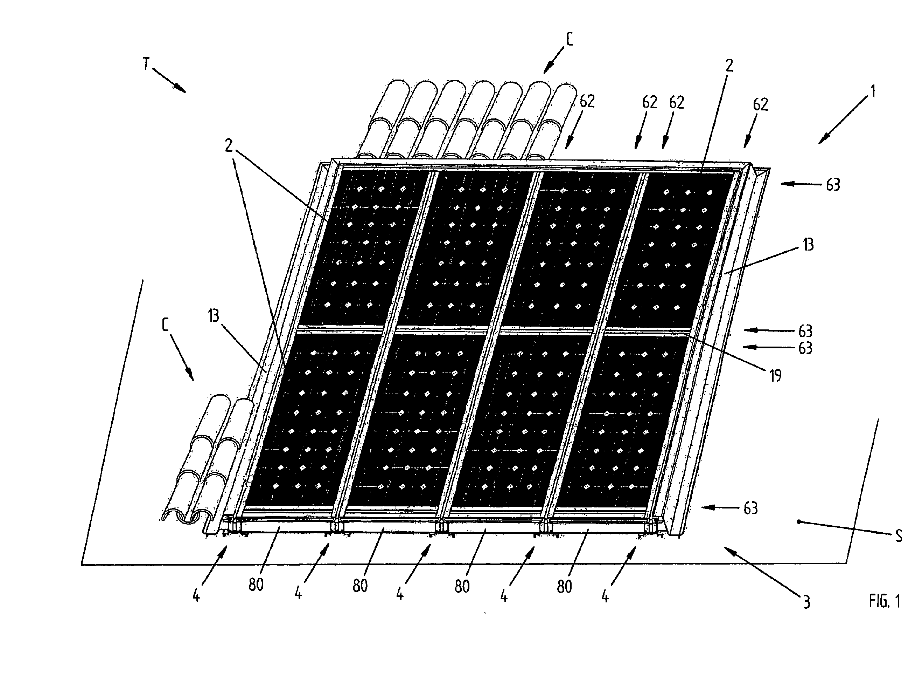

Figure 1 shows a photovoltaic system 1 as a whole, made up according to a preferred embodiment of the present invention.

In particular, the photovoltaic system 1 is shown in its assembled configuration on a surface S of a roof T, of which some roof tiles C are shown.

The photovoltaic system 1 illustrated herein preferably comprises a plurality of modules 2, also called photovoltaic generators or, more commonly, solar panels. The solar panels 2 are eight and arranged side by side in two rows.

The number and shape of said solar panels 2 can be any and will obviously depend on the type and size of the photovoltaic system, as well as on the space available for their installation. The photovoltaic system preferably comprises a plurality of solar panels arranged in several rows.

Said panels 2 are preferably rectangular, meaning in particular that they have two main long sides 62 parallel to each other and two short sides 63 parallel to each other.

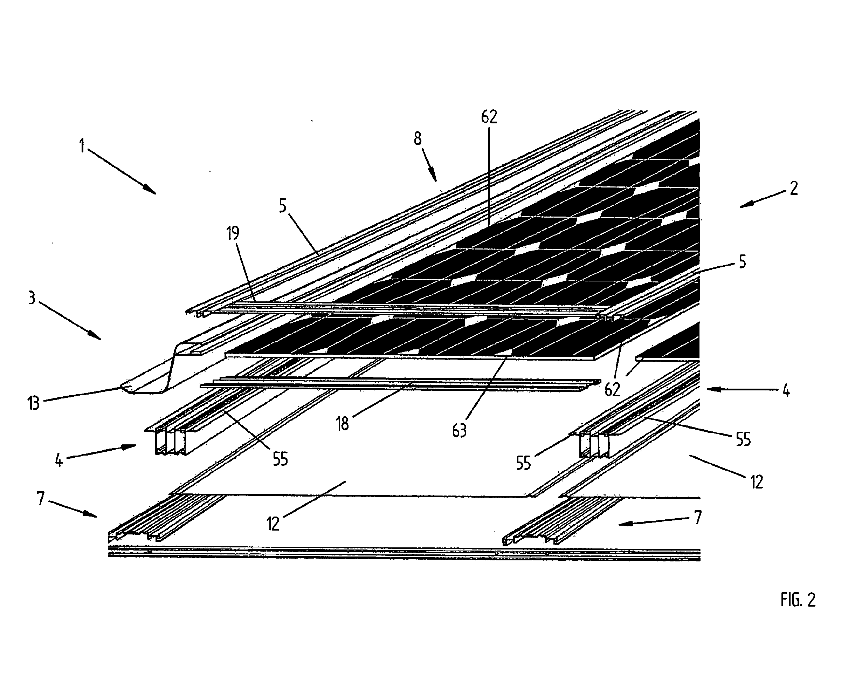

More particularly and according to the invention, the solar panels 2 are associated with each other through a modular structure 3 that substantially creates a supporting frame, as shown in Figure 2.

The modular structure 3 preferably comprises a plurality of first supporting elements with longitudinal development 4 suited to be arranged at the level of the long sides 62 of each solar panel 2 and in a lower position.

Two adjacent panels 2 preferably share a first common element belonging to said first supporting elements 4.

Each first supporting element 4 is associated, at its top, with a first closing element 5, suited to lock the peripheral edge of the long side 62 of the adjacent solar panel/s 2 against the underlying first supporting element 4.

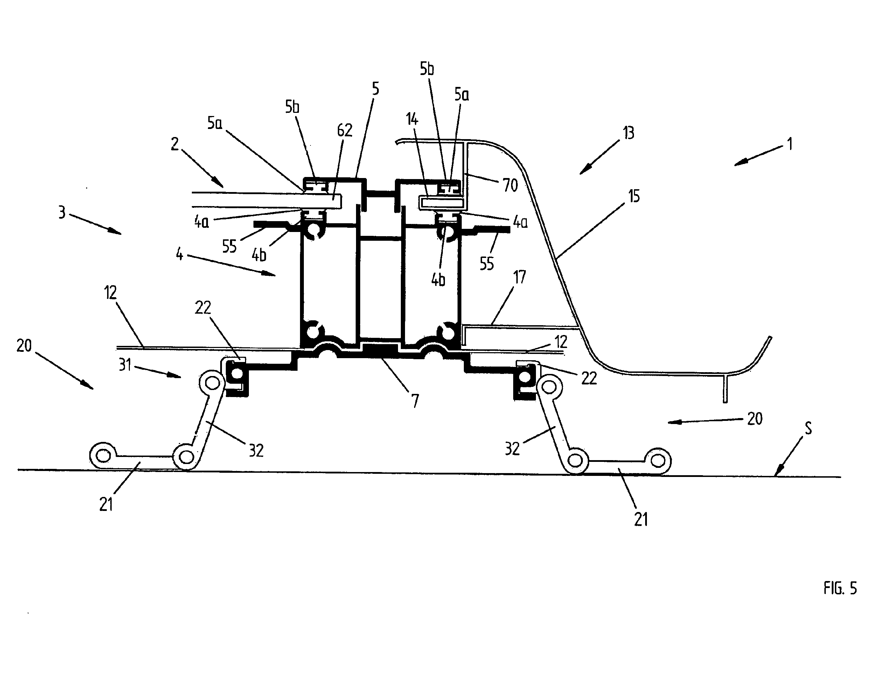

The peripheral edge of the long side 62 of the solar panel 2, as is shown in greater detail in Figure 5, is therefore maintained in a secured position between the first closing element 5 and the first supporting element 4.

Preferably, the first closing element 5 and the first supporting element 4 have a sealing gasket element 5a, 4a that extends over the entire length of the corresponding element 4, 5 at the level of the area of interface with the long side 62 of the solar panel 2.

Preferably, a first one of said sealing gasket elements 4a is accommodated in a seat 4b in the first supporting element 4. More preferably, said seat 4b is constituted by a groove in the first supporting element 4. Advantageously, said groove 4b can be created during the production of the first supporting element 4 when this is obtained through an extrusion process.

Analogously, the second one of said sealing gasket elements 5a is accommodated in a seat 5b in the first closing element 5. More preferably, said seat 5b is constituted by a groove in the first closing element 5. Advantageously, said groove 5b can be obtained during the production of the first closing element 5 when this is obtained through an extrusion process.

The first closing element 5 is associated with the first supporting element 4 through suitable securing means, preferably constituted by screws 6 in the embodiment illustrated herein.

In variant embodiments of the invention said securing means can be made in any other manner suitable for the intended purpose.

Advantageously, in the assembly stage of the photovoltaic system 1 securing the first closing element 5 to the first supporting element 4 means fixing the solar panel 2 at the same time and obtaining the desired hydraulic seal through the sealing gasket elements 5a, 4a.

Still advantageously, the assembly of the photovoltaic system 1 of the invention does not require the use of sealing materials as occurs in the case of the installation techniques of the known type.

In the modular structure 3 according to the invention, a connection base 7 is preferably associated with the underside of the first supporting element 4.

In the embodiment illustrated herein, the connection base 7 has substantially the shape of an upturned U.

The connection base 7 advantageously comprises two coupling portions 8 constituted by respective shaped areas, the purpose of which is described in greater detail below.

The coupling portion 8 preferably has a substantially rectangular cross section. Preferably, the coupling portion 8 comprises an upper projection 9.

In the final assembled configuration of the modular structure 3 the first supporting element 4 and the connection base 7 are integrally connected through suitable connection means, preferably constituted by screws 11 in the embodiment illustrated herein.

In variant embodiments of the invention, said connection means can be produced in any other manner suitable for the intended purpose.

In the embodiment illustrated herein, an intermediate layer 12 is advantagesouly interposed between the first supporting element 4 and the connection base 7. Preferably, said intermediate layer 12 substantially occupies the entire area under each panel 2, thus creating an air space for waterproofing the surface S of the roof T against the external environment.

Preferably, said intermediate layer 12 comprises a transpiring waterproof sheath. Still advantageously, said intermediate layer 12 defines an insulating layer with low heat conductivity that attenuates the undesired effects of the thermal bridge along the first supporting element 4, thus guaranteeing better heat insulation between the external environment and the surface S of the roof T.

In this way, the transmission of thermal energy between the connection base 7 and the first supporting element 4 is considerably reduced, thus reducing heat transmission towards the surface S of the roof T in summer or heat dispersion towards the outside in winter.

This improves the heat insulation characteristics of the photovoltaic system 1 as a whole.

The modular structure 3 then preferably comprises a plurality of second supporting elements with longitudinal development 18 suited to be arranged at the level of the short sides 63 of each panel 2 and in a lower position.

Two adjacent panels 2 preferably share a second common element belonging to said second supporting elements 18.

The second supporting elements 18 are arranged crosswise, in particular at right angles with respect to the first supporting elements 4.

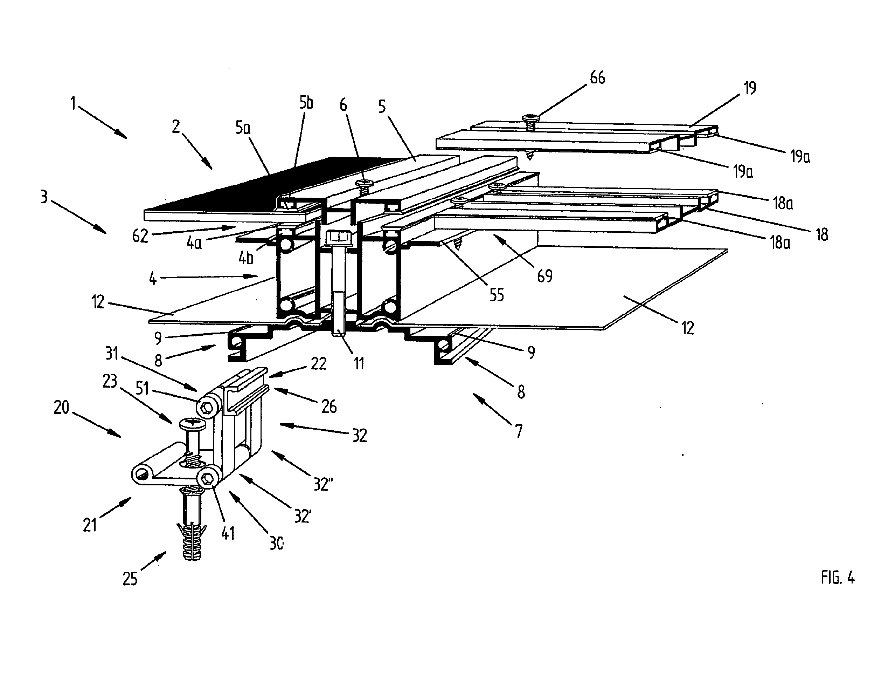

In the preferred embodiment of the invention illustrated and described herein, the second supporting elements 18 are connected at their end 69 to a projecting coupling portion 55 of the first supporting elements 4, as shown in Figure 4. Preferably, the second supporting elements 18 are connected to the projecting coupling portion 55 through screws.

The first and the second supporting elements 4 and 18 substantially define a matrix supporting structure with rectangular areas for the overlying panels 2.

Analogously to the situation described for the first supporting elements 4, each second supporting element 18 is associated, at its top, with a second closing element 19 suited to secure the peripheral edge of the short side 63 of the adjacent solar panel/s 2 against the underlying second supporting element 18. The peripheral edge of the short side 63 of the solar panel 2 is thus kept in a secured position between the second closing element 19 and the second supporting element 18.

Preferably, the second closing element 19 and the second supporting element 18 are provided with a sealing gasket element 19a, 18a that extends over the entire length of the corresponding element 18, 19 at the level of the area of interface with the short side 63 of the solar panel 2.

The second closing element 19 is associated with the second supporting element 18 through suitable securing means, preferably constituted by screws 66 in the embodiment described herein.

In construction variants said securing means may be produced in any other manner suitable for the intended purpose.

Advantageously, in the assembly stage of the photovoltaic system 1 securing the second closing element 19 to the first supporting element 18 means fixing the solar panel 2 at the same time and obtaining the desired hydraulic seal through the sealing gasket elements 19a, 18a.

Still advantageously, the assembly of the photovoltaic system 1 of the invention does not require the use of sealing materials, as occurs in the case of the installation techniques of the known type.

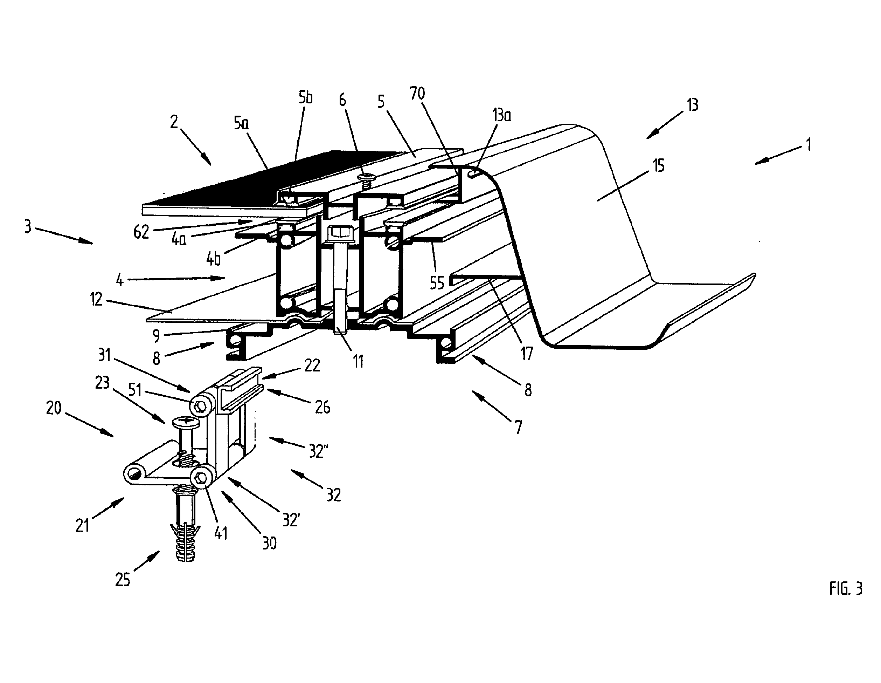

Figure 3 shows a further element belonging to the photovoltaic system 1, and more particularly to the modular structure 3, consisting of a lateral drainage element 13 that is preferably positioned at the periphery of the photovoltaic system 1, as shown also in Figure 1.

The lateral drainage element 13 advantageously makes it possible to convey rainwater downwards, substantially acting as a gutter.

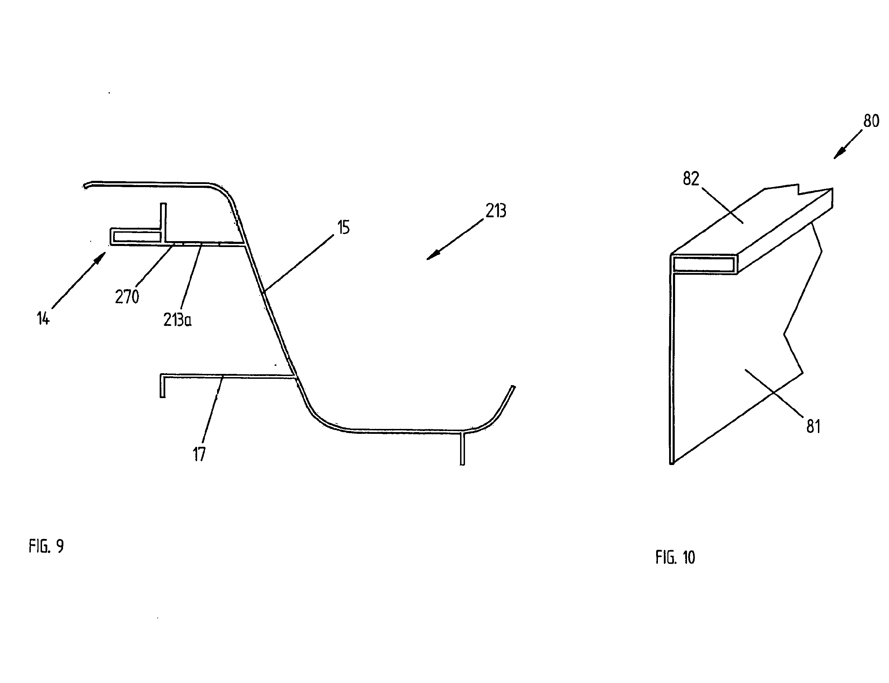

The lateral drainage element 13 is preferably positioned on three sides of the modular structure 3 and thus of the photovoltaic system 1, meaning the upper side and the two lateral sides, where a rainwater drainage action is required. The underside of the modular structure 3 and thus of the photovoltaic system 1 is preferably associated with a further closing element 80, as is better described below and illustrated in Figure 10.

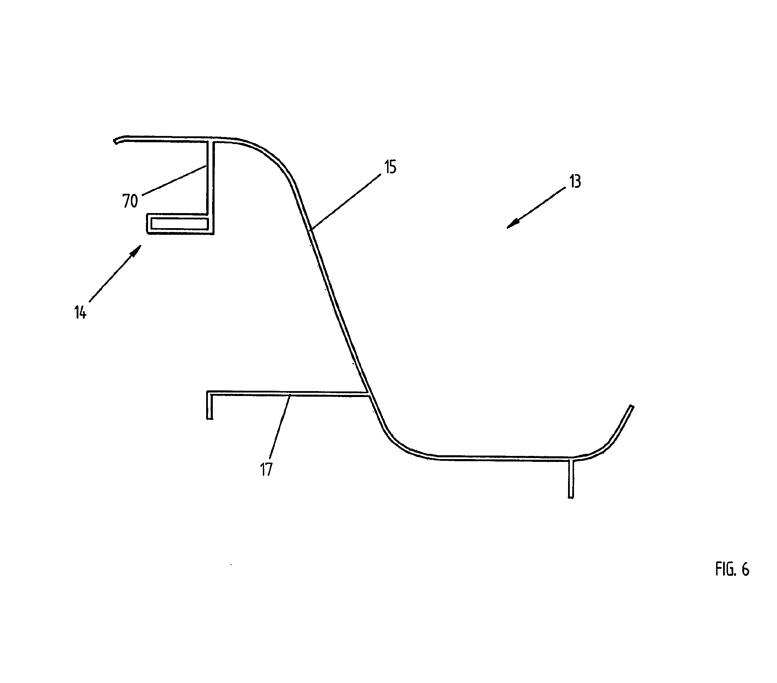

The lateral drainage element 13, better visible in Figure 6, preferably comprises a properly shaped drainage surface 15, a shaped fixing portion 14 and a contact element 17.

Advantageously, the lateral drainage element 13 is closed as a package between the first closing element 5 and the underlying first supporting element 4, analogously to the situation illustrated with regard to the solar panels 2. Preferably, the lateral drainage element 13 is closed as a package in its shaped portion 14 between the sealing gasket elements 5a, 4a of the first closing element 5 and of the first supporting element 4.

Advantageously, in the assembly stage of the photovoltaic system 1 securing the first closing element 5 to the first supporting element 4 means fixing the lateral drainage element 13 at the same time and obtaining the desired hydraulic seal through the sealing gasket elements 5a, 4a.

Advantageously, then, the contact element 17 of the lateral drainage element 13 comes to be arranged in contact with the first supporting element 4 in order to guarantee good rigidity against any deformation to which the drainage surface 15 may be subjected due, for example, to the weight of rainwater or to the wind thrust force.

As shown in Figure 3, the lateral drainage element 13 preferably comprises a vent 13a suited to allow the passage of air towards the underlying area that, in the assembled configuration of the photovoltaic system 1, is substantially closed. The vent 13a is preferably created in a wall 70 that extends vertically from the shaped fixing portion 14 to the drainage surface 15.

Advantageously, the vent 13a of the lateral drainage element 13 allows the ventilation of said underlying closed area, avoiding the accumulation of humidity and the formation of mildew and/or moss.

In particular, this extends the useful life of the elements of the photovoltaic system 1, of the modular supporting structure 3, of the waterproofing sheath 12, as well as of the solar panels 2.

Preferably, the first and the second supporting elements 4 and 18, the first and the second closing elements 5, 19, the connection base 7, the lateral drainage element 13 and the closing element 80 are structural elements. Advantageously, said structural elements are obtained through an extrusion process, more preferably through the extrusion of a metallic material, even more preferably of aluminium. The modular structure 3 is preferably fixed to the underlying surface S of the roof T through the use of a plurality of fixing elements 20.

One of said fixing elements 20 according to a preferred embodiment is shown in Figure 3 and in Figure 4. In Figure 5 it is possible to observe two of said fixing elements 20 in a particular operating configuration in the photovoltaic system 1.

The number of fixing elements 20 used in the modular supporting structure 3 for the assembly of the photovoltaic system 1 depends on the number of solar panels 2 that make up the system 1. In particular, the number of fixing elements 20 depends on the number of first supporting elements 4 used for the assembly of the solar panels 2.

Preferably and advantageously, a first terminal end of each first supporting element 4 is associated with a first pair of fixing elements 20, as indicated for example in Figure 5, and the opposite terminal end of the first supporting element 4 is associated with a second pair of fixing elements 20.

Preferably but not necessarily, the fixing elements 20 used to fix the modular supporting structure 3 are all the same.

The fixing element 20 comprises a first portion 21 suited to be connected to the underlying surface S of the roof T and a second portion 22 suited to be coupled with the overlying part of the photovoltaic system 1.

Preferably, the first portion 21 is associated with first fixing means 23 for connection to the surface S of the roof T.

More preferably, said first fixing means 23 comprise a through hole 24 suited to accommodate a fixing screw 25 that can be screwed onto the surface S of the roof T, preferably a Fisher® screw anchor.

Preferably, the second portion 22 is associated with second fixing means 26 for connection to the overlying part of the photovoltaic system 1.

More particularly, in the embodiment illustrated and described herein, the second fixing means 26 allow connection to the modular structure 3 of the photovoltaic system 1.

More particularly, the second fixing means 26 allow connection to the connection base 7 of the modular structure 3.

The second fixing means 26 preferably comprise a U-shaped area suited to be coupled with the coupling portion 8 of the connection base 7.

More preferably, the U-shaped area is snap-coupled with the coupling portion 8 of the connection base 7, with the upper projection 9 of the coupling portion 8 housed in a corresponding seat in the U-shaped area.

Advantageously, the operations for connection and/or disconnection of the fixing element 20 to/from the connection base 7 are simplified and quick.

It is evident that in construction variants of the invention the second fixing means can be carried out in a different manner.

Preferably, the fixing element 20 is configured in such a way that the first portion 21 and the second portion 22 can be positioned as desired in different mutual positions.

In the preferred embodiment of the invention described herein, the positioning in different mutual positions is obtained through two articulation areas 30 and 31 defined along the route between the first portion 21 and the second portion 22. The two articulation areas 30 and 31 are defined at the ends of an intermediate articulation element 32 between the two portions 21, 22.

The intermediate articulation element 32 preferably comprises two parallel articulation arms 32' and 32". In a variant embodiment of the invention, however, just one articulation arm may be provided.

The first portion 21 and the second portion 22 of the fixing element 20 can thus assume different mutual operating positions, for example as shown in Figure 3, where the first portion 21, the intermediate element 32 and the second portion 22 are substantially positioned at right angles with respect to each other or, as indicated in Figure 5, said elements 21, 32, 22 are arranged mutually inclined with respect to each other.

It is evident that by varying the mutual position of said elements 21, 32, 22 that define the fixing element 20 it is possible to vary the mutual distance between the first portion 21 and the second portion 22 of the fixing element 20 and, consequently, vary the distance of the supporting base 7 from the surface S of the roof T. In this way, any difference in height deriving from the imperfect planarity of the surface S can be compensated for by the fixing element 20, so that the panel 2 or more generally the various panels that make up the system 1 can be positioned correctly with the right inclination. This makes it possible to avoid using shims, as instead is the case with the known installation techniques. Furthermore, a pleasant aesthetic aspect is maintained, with correct planarity among the various panels.

Preferably, the fixing element 20 comprises securing means suited to maintain the mutual position defined between the first portion 21 and the second portion 22.

The securing means are preferably provided at the level of the two articulation areas 30 and 31.

The securing means preferably comprise a first screw 41 that is inserted through the first articulation arm 32', then in the first portion 21 and is engaged in a threaded hole in the second articulation arm 32". The package closure of the first screw 41 allows the first portion 21 and the intermediate articulation arm 32 to be mutually secured in the desired position.

Furthermore, the securing means preferably comprise a second screw 51 that is inserted through the first articulation arm 32', then in the second portion 22 and is engaged in a threaded hole in the second articulation arm 32". The package closure of the second screw 51 allows the second portion 22 and the intermediate articulation arm 32 to be mutually secured in the desired position.

In the embodiment illustrated and described herein, the securing action obtained through said securing means is substantially defined by mechanical interference areas at the level of the articulation areas 30 and 31.

It is evident that in different embodiments said securing action can be obtained in a different way.

The fixing system of the modular supporting structure 3 through the use of a plurality of fixing elements 20 represents one of the possible methods for fixing the modular supporting structure according to the invention.

It is evident that in construction variants of the invention different fixing techniques may be used.

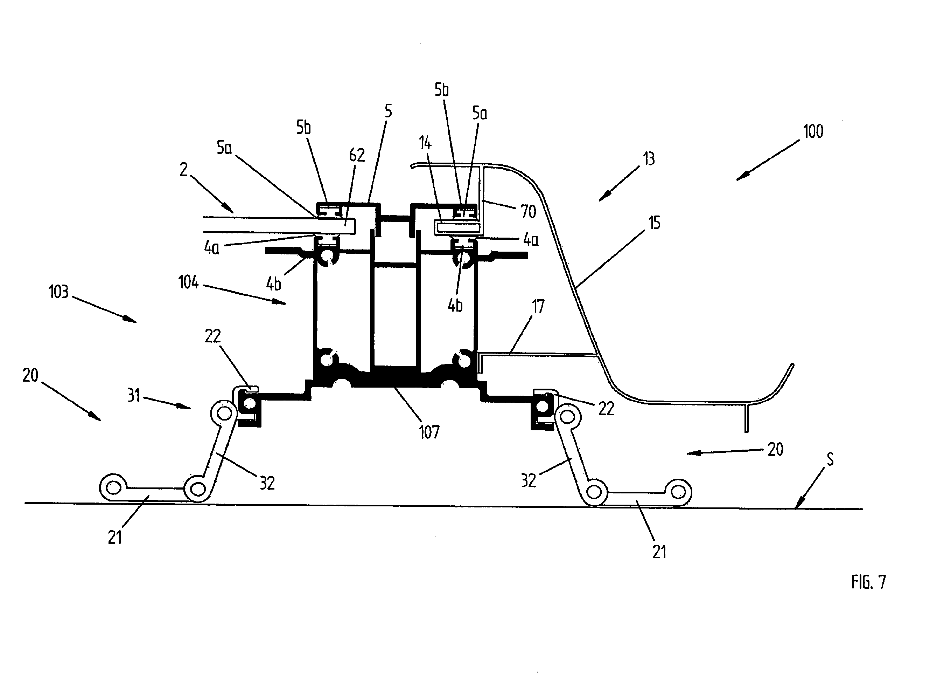

Figure 7 shows a variant embodiment of the photovoltaic system 100 according to the present invention.

Said variant embodiment of the photovoltaic system 100 differs from the one previously described with reference to Figures from 1 to 6 only in that the connection base 107 of the modular supporting structure 103 is made in a single body and is integral with the overlying first supporting element 104.

Said embodiment makes it possible to reduce the construction complexity of the photovoltaic system 100 and to reduce the assembly operations, since actually it is not necessary to assemble the first supporting element onto the connection base as in the embodiment previously described.

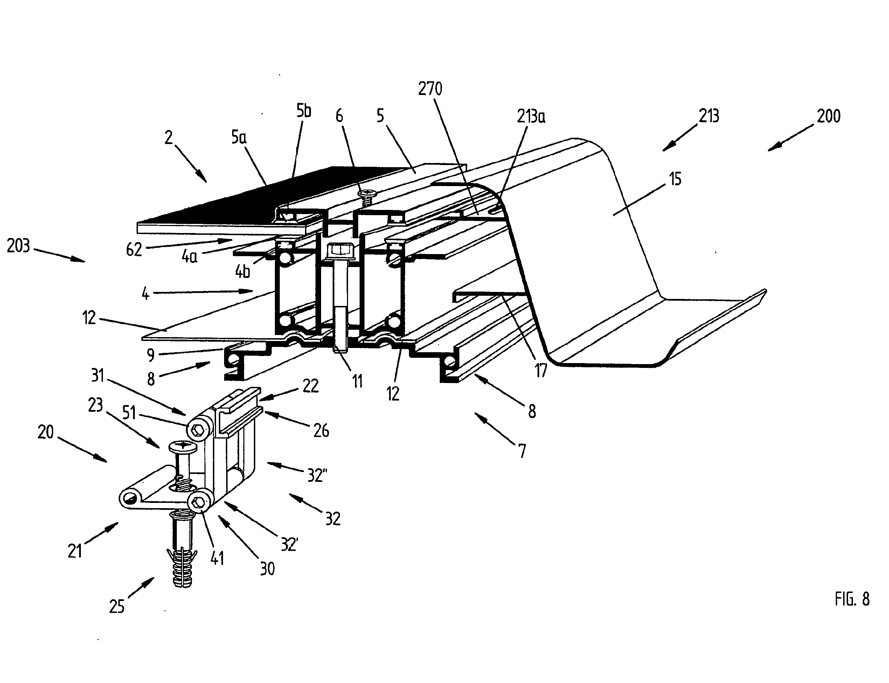

Figures 8 and 9 show a different variant embodiment of the photovoltaic system 200 according to the present invention.

Said embodiment of the photovoltaic system 200 differs from the one described above with reference to Figures from 1 to 6 due to the different shape of the lateral drainage element 213 of the modular supporting structure 203.

The lateral drainage element 213 differs from the lateral drainage element 13 of the first embodiment of the invention in that the vent 213a is provided in a wall 270 that extends horizontally from the shaped fixing portion 14 to the drainage surface 15.

Figure 10 shows a detail of the further closing element 80 of the modular supporting structure 3 of the photovoltaic system of the invention that, as previously explained, is arranged at the level of the lower side of the same system 1, as shown in Figure 1.

The closing element 80, together with the lateral drainage elements 13, advantageously makes it possible to close the space under the panels 2 in order to avoid the accumulation of undesired elements, like leaves or similar elements, or the entry of animals, usually birds.

The closing element 80 preferably comprises a closing surface 81, preferably straight, and a shaped fixing portion 82.

Advantageously, the closing element 80 is closed as a package between second closing elements 19 and underlying second supporting elements 18 of the modular supporting structure 3, analogously to the procedure described above for the solar panels 2 and the lateral drainage element 13.

Advantageously, upon assembly of the photovoltaic system 1 securing the second closing element 19 onto the first supporting element 18 means fixing the drainage element 80 at the same time and obtaining the desired hydraulic seal through the sealing gasket elements 19a, 18a.

In a preferred embodiment of the invention the closing surface 81 is solid.

In variant embodiments of the invention, the closing surface 81 may advantageously comprise vents or, preferably, it may have a net-shaped structure. It has thus been proved that the present invention allows the set objects to be achieved. In particular, the invention makes it possible to provide a solar energy system in which the operations required for installation are simplified compared to those required in the systems of the known art.

While the present invention has been described with reference to the special embodiments illustrated in the figures, it should be noticed that the present invention is not limited to the specific embodiments illustrated and described herein; rather, further variant embodiments fall within the scope of the present invention, which is defined in the following claims.

## Claims

1. Modular supporting structure (3; 103; 203) for a solar energy system (1; 100; 200) of the type comprising at least one solar panel (2), said modular supporting structure (3; 103; 203) being suited to be fixed to a supporting base (S) and being **characterized in that** it comprises:
- a first supporting element (4; 104) suited to be arranged in contact with a first surface of said at least one panel (2);
- a first closing element (5) suited to be associated with said first supporting element (4; 104) and suited to be arranged in contact with a second surface of said at least one panel (2) so as to secure said at least one panel (2).

2. Modular supporting structure (3; 103; 203) according to claim 1), **characterized in that** said first closing element (5) and said first supporting element (4; 104) are suited to be arranged in contact with said first surface and said second surface of said at least one panel (2) at the level of a first peripheral edge (62) of said at least one panel (2).

3. Modular supporting structure (3; 103; 203) according to claim 1) or 2), **characterized in that** it also comprises:
- a second supporting element (18) suited to be arranged in contact with a first surface of said at least one panel (2);
- a second closing element (19) suited to be associated with said second supporting element (18) and suited to be arranged in contact with a second surface of said at least one panel (2) so as to secure said at least one panel (2).

4. Modular supporting structure (3; 103; 203) according to claim 3), **characterized in that** said second closing element (19) and said second supporting element (18) are suited to be arranged in contact with said first surface and said second surface of said at least one panel (2) at the level of a second peripheral edge (63) of said at least one panel (2).

5. Modular supporting structure (3; 103; 203) according to any of the preceding claims, **characterized in that** said first supporting element (4; 104) comprises a seat (4b) suited to accommodate a gasket element (4a), said gasket element (4a) being suited to be interposed between said first supporting element (4; 104) and said first surface of said at least one panel (2).

6. Modular supporting structure (3; 103; 203) according to any of the preceding claims, **characterized in that** said first closing element (5) comprises a seat (5b) suited to accommodate a gasket element (5a), said gasket element (5a) being suited to be interposed between said first closing element (5) and said second surface of said at least one panel (2).

7. Modular supporting structure (3; 103; 203) according to any of the preceding claims, **characterized in that** it comprises securing means (11) suited to secure said first closing element (5) to said first supporting element (4; 104).

8. Modular supporting structure (3; 103; 203) according to any of the preceding claims, **characterized in that** it comprises at least one drainage element (13; 213) suited to be positioned at the periphery of said modular supporting structure (3; 103; 203), said at least one drainage element (13; 213) being secured between said first closing element (5) and said first supporting element (4; 104) when said first closing element (5) is associated with said first supporting element (4; 104).

9. Modular supporting structure (3; 103; 203) according to claim 8), **characterized in that** said at least one drainage element (13; 213) comprises a fixing portion (14) suited to be secured between said first closing element (5) and said first supporting element (4; 104) when said first closing element (5) is associated with said first supporting element (4; 104) and comprises a drainage surface (15) for conveying rainwater.

10. Modular supporting structure (3; 103; 203) according to claim 8) or 9), **characterized in that** said at least one drainage element (13; 213) comprises at least one vent (13a; 213a) suited to ensure the passage of air towards said modular supporting structure (3; 103; 203).

11. Modular supporting structure (3; 203) according to any of the preceding claims, **characterized in that** said first supporting element (4) comprises at least two portions (4, 7) suited to be associated with each other, an intermediate element (12) for achieving thermal discontinuity between said two portions (4, 7) being suited to be positioned between said two portions.

12. Modular supporting structure (3; 203) according to claim 11), **characterized in that** said intermediate element (12) comprises a sheath.

13. Modular supporting structure (3; 103; 203) according to any of the preceding claims, **characterized in that** it comprises at least one fixing element (20) suited to fix said modular supporting structure (3; 103; 203) to said supporting base (S).

14. Modular supporting structure (3; 103; 203) according to claim 13), **characterized in that** said fixing element (20) comprises a first portion (21) suited to be connected to said supporting base (S) and a second portion (22) suited to be connected to said modular supporting structure (3; 103; 203).

15. Solar energy system (1; 100; 200) of the type comprising at least one solar panel (2) suited to be fixed to a supporting base (S) by means of a modular supporting structure (3; 103; 203), **characterized in that** said modular supporting structure (3; 103; 203) is constructed according to any of the preceding claims.
